Europäisches Patentamt

European Patent Office

Office européen des brevets

(11) Publication number: **0 619 073 A2**

(12)

# EUROPEAN PATENT APPLICATION

(21) Application number : **94870060.4**

(51) Int. Cl.[5] : **A01N 25/28**

(22) Date of filing : **01.04.94**

(30) Priority : **22.11.93 US 156138**
**17.05.93 US 63965**
**05.04.93 US 42968**

(43) Date of publication of application :
**12.10.94 Bulletin 94/41**

(84) Designated Contracting States :
**ES FR IT**

(71) Applicant : **MONSANTO COMPANY**
**Patent Department**
**800 North Lindbergh Boulevard**
**St. Louis, Missouri 63167 (US)**

(72) Inventor : **Lundstedt, Alan Paul**
**1438 Old Farm Drive**
**St. Louis County, Missouri 63146 (US)**
Inventor : **Ngo, Toan Mahn**
**515 Forest Run Drive**
**Eureka, Missouri 63025 (US)**

(74) Representative : **Bosch, Henry et al**
**Monsanto Services International S.A.**
**Patent Department**
**Avenue de Tervuren 270/272**
**Letter Box No. 21**
**B-1150 Brussels (BE)**

(54) **Water-based pesticidal flowable formulations.**

(57)    The pourability of pesticide-containing solid microcapsules suspended in a water-based carrier is enhanced by the presence of an effective amount of a solubilized potassium polyphosphate salt, such as tetrapotassium pyrophosphate.

EP 0 619 073 A2

## BACKGROUND OF THE INVENTION

The present invention relates to microencapsulated pesticidal compositions for agricultural use and more particularly relates to water-based herbicidal formulations with improved pourability, excellent compatibility with standard sprayable fluid fertilizers, and reduced antagonism in mixtures of other herbicides, especially glyphosate.

Agricultural chemicals, particularly herbicides, are sold and delivered to applicators in a wide variety of formulations, including solid formulations, such as powders, dusts and granules and time-release microcapsules, liquid formulations, such as solutions and emulsions, and suspensions of solids in liquid carriers. The choice of which type of selected formulation is generally governed by many considerations, such as the physical characteristics of the active ingredients, the crop or weed species to which the formulation is to be applied, and whether the application is better made postemergence or preemergence.

Delayed-release formulations are chosen to provide pesticidal efficacy over an extended period of time. Microencapsulation of the pesticide is a delivery form often selected for providing the desired delayed-release. Applying microencapsulated pesticides in solid formulations has several drawbacks in terms of convenience of handling and distributing the same in an environmentally acceptable way, particularly in bulk quantities. In recent times it has been found to be advantageous from handling and distributing standpoints to formulate microencapsulated pesticides in water suspensions.

Another advantage of formulating pesticide containing microcapsulates is the ability to produce a product package containing a plurality of pesticides, wherein antagonistic action between the pesticides is reduced by means of the capsule shell.

In such mixtures the effectiveness of the plurality of the herbicides is attained at different time frames after application. Unfortunately, water-based pesticidal formulations containing a high loading of pesticide-containing microcapsules and an effective suspension system have relatively high viscosities and are retained to an undesirable extent on the container walls from which the formulation is being drained or has been drained. One can reduce the viscosities and the retention of the formulation by simply adding more water to the formulation. However, the addition of water tends to destabilize an otherwise stable formulation and obviously reduces its loading of the pesticide in the container of a given volume. Shipping costs of the diluted product also increase proportionately.

It is, therefore, advantageous to reduce the viscosity of water-based formulations of microcapsules containing a pesticide without reduction in the stability of suspension and in the loading of quantity of the active ingredient by means of adding to the formulation a small but effective amount of a pourability enhancer.

The present invention provides a water-based pesticidal formulation having a high loading of microencapsulated pesticide but with a significantly enhanced pourability but without significant sacrifice of suspension stability.

The pourability problem is particularly acute when the concentration of microcapsules, pesticide and optionally added herbicide solvent is relatively high, for example, 50%, and when an aqueous suspension of microcapsules with a capsule wall of polyurea is prepared, which microcapsules contain a herbicide and which microcapsules are prepared by dispersing a solution of polymethylenepolyphenylisocyanate and the herbicide in water and subsequently reacting the isocyanate with a polyamine using a salt of ligninsulfonic acid (lignosulfonate) as an anionic surfactant and when other components have been added to provide long term suspension stability of the microcapsules.

## SUMMARY OF THE INVENTION

The present invention provides a new and useful formulation of a microencapsulated pesticide stably suspended as a finely divided material in a water-based carrier. The walls of the microcapsules are made of a porous polymer, especially urea polymer. The formulation includes a suspension system to inhibit or prevent the microcapsules from settling and agglomerating. The suspension system includes an effective pourability enhancing amount of a solubilized inorganic potassium polyphosphate salt in ionic form. The suspension system includes water and may include at least one anionic surfactant, and additionally may optionally contain clay and a polymeric thickening agent to stabilize the suspension of the microcapsules. Also, the formulation may contain antifoam agents, antifreeze agents, biocides, salts, dispersants, herbicide activity potentiators and antagonism inhibitors and like additaments conventionally used in formulating pesticides. The formulation may include a second pesticide which is not encapsulated but which is a component of the suspension system. Such second pesticide is preferably glyphosate or a water soluble salt of glyphosate or a suspended solid, such as atrazine or terbutylazine. Surprisingly, microencapsulated alachlor and glyphosate can be blended together in the formulation and in tank mixtures of the formulated microcapsules and separately formulated glyphosate while minimizing the antagonism normally experienced when such mixtures are employed as a herbicide mix. The formulation has long term stability and upon being frozen at low temperature can be reliquified repeatedly at room temperature without substantial loss of suspension stability. The formulation is compatible with fluid fertilizers to provide a composition having excellent sprayability using standard agricultural spray equipment. The addition and dissolution of the potassium polyphosphate salt surprisingly provides an immediate reduction in viscosity of the material being formulated. This early reduction in viscosity ameliorates material handling problems which otherwise would be encountered in subsequent processing of a more viscous composition.

## DETAILED DESCRIPTION OF THE INVENTION

During the first step in preparing the formulation of the present invention, an aqueous suspension of microcapsules of the selected pesticide is provided. The walls of the microcapsules are made of a porous polymer, such as polyurea. The step comprises initially providing an aqueous solution containing an emulsifier selected preferably from the group of the salts of ligninsulfonic acid, for example, the sodium, potassium, magnesium, calcium and ammonium salts. Particularly effective is the sodium salt of lignin-sulfonic acid. A sparingly water soluble pesticide and polyfunctional polyisocyanate are added to the composition of water and lignosulfonate surfactant. The resulting mixture is stirred sufficiently under suitable reaction conditions to form a homogenous dispersion of small droplets of the pesticide within the aqueous phase.

Thereafter, a polyfunctional amine is added with the stirring being continued until the polyamine has essentially fully reacted with the polyfunctional isocyanate. The polyfunctional isocyanate and the polyfunctional amine, which is conveniently added in an aqueous solution, react to form microcapsules having polyurea walls encapsulating the pesticide. The rate of the polymerization will depend on the reaction conditions employed. The rate of polymerization will generally be directly related to the temperature at which the reaction takes place.

The encapsulation process of the present invention is capable of satisfactory performance and production of encapsulation material without adjustment to a specific pH value. That is, no adjustment of the pH of the system need be made during the encapsulation process. If it is desired to adjust the pH of the finished microcapsule formulation as, for example, when the aqueous based formulation of the microcapsules is combined with other herbicides, fertilizers, etc., conventional and suitable reagents for pH adjustment may be used. Such reagents include hydrochloric acid, acetic acid, phosphoric acid, sodium hydroxide, potassium hydroxide, etc.

The agitation employed to establish the dispersion of water immiscible phase droplets in the aqueous phase during the production of the formulation of the present invention may be supplied by any means capable of providing suitable high shear, that is, any variable shear mixing apparatus, e.g., a Waring Blender, a Brinkman Polytron homogenizer, Rose Model 100L homogenizer, and the like can be usefully employed to provide the desired agitation.

The particular size of the microcapsules will range from about 1 micron up to about 100 microns in diameter. From about 1 to about 20 microns is an optimum range. A range of from about 5 to about 50 microns is satisfactory for formulating.

The encapsulated pesticide is any suitable organic pesticide of low water solubility whether in the form of a liquid or a solid meltable below about 70°C, preferably below the temperature at which the polyurea formation is carried out, or a solution of one or more pesticides in a solvent of low water solubility. As used herein, the term "pesticide" also includes chemicals and microbial agents used as active ingredients of products for control of crops and lawn pests and diseases. The term "pesticide" also includes insecticides, acaricides, nematicides, plant growth regulators, pest repellants, synergists, herbicide safeners (agents which reduce its phytotoxicity of herbicides to crop plants) and the like and mixtures thereof.

As can be seen, in accordance with the process of this invention, it is possible to formulate the product with a variety of pesticides. Especially suitable are haloacetanilides, generally, and 2-chloroacetanilides, more particularly.

Examples of suitable individual pesticides are listed hereinafter. Where known, the common name of the pesticide is used to designate the individual active ingredient (*q.v.* the Pesticide Manual, 9th Edition, 1991, British Crop Protection Council.)

Within the scope of this invention, polyisocyanates will be generally understood as meaning those compounds that contain two and more isocyanate groups in the molecule. Preferred isocyanates are di- and triisocyanates whose isocyanate groups may be linked to an aliphatic or aromatic moiety. Examples of suitable aliphatic diisocyanates and aliphatic triisocyanates are tetramethylene diisocyanate, pentamethylene diisocyanate, hexamethylene diisocyanate and 4-(isocyanatomethyl)-1,8-octyl diisocyanate. Suitable aromatic isocyanates are toluylene diisocyanate (TDI: mixture of 2,4- and 2,6-isomers), diphenylmethane-4,4'-diisocyanate (MDI: DESMODUR Registered TM VL, Bayer), polymethylene polyphenylisocyanate (MONDUR Registered TM MR, Mobay Chemical Company); PAPI Registered TM, PAPI Registered TM 135 (Upjohn Co.), 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate, and 4,4',4"-triphenylmethane triisocyanate. A further suitable diisocyanate is isophorone diisocyanate. Also suitable are adducts of diisocyanates with polyhydric alcohols, such as ethylene glycol, glycerol and trimethylolpropane, obtained by addition, per mole of polyhydric alcohol, of a number of moles of diisocyanate corresponding to the number of hydroxyl groups of the respective alcohol. In this way several molecules of diisocyanate are linked through urethane groups to the polyhydric alcohol to form high molecular polyisocyanates. Another suitable product of this kind (DESMODUR Registered TM L) can be prepared by reacting 3 moles of toluylene diisocyanate with 1 mole of 2-ethylglycerol (1,1-bismethylolpropane). Further suitable products are obtained by addition of hexamethylene diisocyanate or isophorone diisocyanate with ethylene glycol or glycerol. Preferred polyisocyanates are diphenylmethane-4,4'-diisocyanate and polymethylene polyphenylisocyanate.

The di- and triisocyanates specified above can be employed individually or as mixtures of two or more such isocyanates.

Suitable polyamines within the scope of this invention will be understood as meaning in general those compounds that contain two or more amino groups in the molecule, which amino groups may be linked to aliphatic and aromatic moieties.

Examples of suitable aliphatic polyamines are alpha, omega-diamines of the formula $H_2N-(CH_2)_nNH_2$ wherein n is an integer from 2-6. Exemplary of such diamines are ethylenediamine, propylene-1,3-diamine, tetramethylenediamine, pentamethylenediamine and hexamethylenediamine. A preferred diamine is hexamethylenediamine.

Further suitable aliphatic polyamines are polyethylenimines of the formula $H_2N(CH_2CH_2NH)_n-H$ wherein n is an integer from 2 to 5. Representative examples of such polyethylenimines are: diethylenetriamine, triethylenetriamine, tetraethylenepentamine, pentaethylenehexamine.

Examples of suitable aromatic polyamines are 1,3-phenylenediamine, 2,4-toluylenediamine, 4,4'-diaminodiphenylmethane, 1,5-diaminonaphthalene, 1,3,5-triaminobenzene, 2,4,6-triaminotoluene, 1,3,6-triaminonaphthalene, 2,4,4'-triaminodiphenyl ether, 3,4,5-triamino 1,2,4-triazole, bishexamethylenitriamien and 1,4,5,8-tetraaminoanthraquinone. Those polyamines which are insoluble or insufficiently soluble in water may be used as hydrochlorides.

Yet further suitable polyamines are those that contain sulfo or carboxyl groups in addition to the amino groups. Examples of such polyamines are 1,4-phenylenediaminesulfonic acid, 4,4'-diaminodiphenyl-2-sulfonic acid, or diaminomonocarboxylic acids such as ornithine and lysine.

The above polyamines may be used individually or as mixtures of two or more polyamines.

Suitable pesticides that may be formulated in the process of this invention are those which are relatively insoluble in but stable to water, are liquid at room temperature or have a melting point $</= 70°C.$, or those that are soluble in a water-immiscible organic solvent, are inert to isocyanates, and are able to dissolve polyisocyanates of the above specified kind.

Suitable water-immiscible solvents in which the pesticides may be dissolved are aliphatic and aromatic hydrocarbons, such as hexane, cyclohexane, benzene, toluene, xylene, mineral oil or kerosene. Also suitable solvents are cyclohexanone, as well as halogenated hydrocarbons such as methylene chloride, chloroform and o-dichlorobenzene. The mixtures of mono- and polyalkylated aromatics commercially available from Shell Oil Co. under the registered trademark SHELLSOL are also suitable.

In the process of this invention, it is possible to formulate a very wide range of pesticides, for example herbicides, plant growth regulators, insecticides, acaricides, nematicides, safeners and ectoparasiticides. With respect to their chemical constitution, these pesticides may belong to a very wide range of compound classes. Examples of compound classes to which the pesticides which can be formulated in the process of this invention may belong are: dinitroanilines, acylalanines, triazole derivatives, carbamates, phosphoric acid esters, pyrethroids, benzilic acid esters, polycyclic halogenated hydrocarbons, formamidines and dihydro-1,3-thiazol-2-ylidene anilines. Examples of suitable individual compounds of the above mentioned compound classe are listed hereinafter. One or more pesticides may be microencapsulated and other pesticides may be contained in the formulation without being encapsulated. The nonencapsulated pesticide can be water soluble, such as glyphosate herbicide, or can be a suspended solid, such as atrazine. The term "glyphosate herbicide" includes glyphosate in acid form and water soluble salts thereof, such as monoisopropylammonium salt (IPA) and trimethylsulfonium salt (TMS).

s-Triazines

Atrazine, Propazine, Terbutylazine, Simazine, Ametryn, Aziprotryn, Desmetryn, Dipropetryn, Prometryn, Terbutryn, Terbumeton.

Ureas

Chlorobromuron, Chloroxuron, Chlorotoluron, Fluometuron, Metobromuron, Thiazafluron.

Haloacetamides

Dimethachlor, Metolachlor, Pretilachlor, 2-Chloro-N-(1-methyl-2-methoxyethyl)-acet-2,6-xylidide, Alachlor, Butachlor, Diethatyl-ethyl, Propanil, Acetochlor, 2-Chloro-N-[(1-ethyl-2-methoxy)-ethyl]-N-(2,4-dimethyl-thien-3-yl)acetamide.

Diphenyl ether derivatives

Bifenox, Diclofop-methyl, 4-(4-Pentyn-1-yloxy) diphenyl ether, Acifluorfen, Aclonifen.

Phenoxypropionic acid derivatives

Fluazifop-P-butyl.

Dinitroanilines

Butralin, Ethalfluralin, Fluchloralin, Isopropalin, Pendimethalin, Profluralin, Trifluralin.

Acylalanines

Metalaxyl, Benzoylprop-ethyl, Flamprop-methyl.

Triazole derivatives

Propiconazole, 1-[2-(2,4-dichlorophenyl)-pent-1-yl]-1H-1,2,4-triazole; Triadimenol.

Carbamates

Dioxacarb, Furathiocarb; Aldicarb, Benomyl, 2-sec-butylphenylmethylcarbamate, Ethiofencarb, Isoprocarb, Propoxur, Carbetamide, Butylate, Diallate, EPTC, Molinate, Thiobencarb, Triallate, Vernolate.

Phosphoric acid esters

Piperophos, Anilofos, Butamifos, Azamethiphos, Chlorfenvinphos, Dichlorvos, Diazinon, Methidathion; Azinphos-ethyl, Azinphos-methyl, Chlorpyrifos, Cyanophos, Demeton-S-methyl, Dimethoate, Disulfoton, Famphur, Fonofos, Formothion, Heptenophos, Isoxathion, Malathion, Mephosfolan, Mevinphos, Naled, Oxydemetonmethyl, Parathion, Phoxim, Profenofos, Propaphos, Propetamphos, Prothiophos, Quinalphos, Sulprofos, Terbufos, Triazophos, Fenamiphos, Isazofos; s-Benzyl-o,o-diisopropylphosphorothioate, Edinfenphas, Pyrazophos;

Pyrethroids

Allethrin, Bioallethrin, Bioresmethrin, Cyhalothrin, Cypermethrin, Deltamethrin, Fenpropathrin, Fenvalerate, Flucythrinate, Fluvalinate, Permethrin, Pyrethrins, Resmethrin, Tetramethrin, Tralomethrin.

Benzilic acid esters

Brompropylate, Chlorpropylate.

Polycyclic halogenated hydrocarbon

Aldrin, Endosulfan.

## Formamidines

Chlordimeform, Dihydro-1,3-thiazol-2-ylidene-aniline N-(2,3-Dihydro-3-methyl-1,3-thiazol-2-ylidene)-2,4-xilidine.

## Miscellaneous

Methopren, Kinopren, Flupropimorph, Tridemorph, Bromoxynil; Crimidine, Bupyrimate; Sethoxydim; Chlorphenprop-methyl, Carboxin, Buthiobate, Amithraz, Dicofol, Oxadiazon, Prochloraz, Propargite, Dicamba, Camphechloro, Chlorfenson.

The microcapsules which can be prepared by the process of this invention may contain the above specified pesticides individually or as combinations of two or more pesticides.

The homogeneous dispersions of polyurea microencapsulated pesticides in water with an effective emulsifier, such as lignosulfonate prepared in the first step is moved to a blending zone wherein a suspension system composition is added. In addition to the polyphosphate salt the suspension system composition will generally comprise a combination of agents, such as surfactants, dispersants, antifreeze agents, clays, water, salts, polymers, and other suspension stabilizing and density balancing agents, appropriately selected to keep the microcapsules in stable homogeneous suspension in the water-based carrier over an extended period of time as long as two years. The suspension agents will generally comprise 1-15% of the formulation and preferably 2-10%, not including the potassium polyphosphate salt.

A wide range of such agents may be used, and the optimum combination for each particular suspension system of active ingredient will vary. For haloacetanilide herbicides suitable clays include bentonite clay and attapulgite clay and mixtures, preferably in the range from about 0.01% to about 1.0% by weight, although greater or lesser amounts may be employed. The presence of at least one clay conventionally used in suspension systems improves the stability of the suspended microcapsules and particularly aids in the redistribution of the microcapsules upon shaking in the event some settling of microcapsules is experienced and redistribution thereof is required. A preferred suspension system includes a small amount of a xanthan gum thickening agent to aid in stabilizing the suspension of the microcapsules. The gum is preferably present in an amount in the range from about 0.01% to about 0.1% by weight although greater or lesser amounts may be employed.

The pesticide formulations just described are often very viscous and when drained from a can or similar container will stick in the form of a relatively heavy viscous coating to the walls of the container when the container is tilted to pour the contents therefrom. To significantly improve the flowability of the formulation it is important in the practice of this invention that a viscosity reducing amount of a solubilized inorganic potassium polyphosphate salt be added to the composition. Phosphates are those phosphorus compounds in the ions of which each atom of phosphorus is surrounded by four oxygen atoms arranged at the corners of the tetrahedron. The polyphosphate salts useful in the practice of the present invention are depicted by the following structural formula

$$K_{n+2}P_nO_{3n+1}$$

wherein n = 2,3,4,5 .... . When n is 2, the compound is pyrophosphate (dipolyphosphate). When n is 3, the compound is tripolyphosphate. The most preferred polyphosphate salt is tetrapotassium pyrophosphate (TKPP) or a precursor thereof. The amount of phosphate salt in the composition will be in the range from about 1% to about 15% by weight or higher and preferably from about 2-10% by weight although greater or lesser amounts may be employed. Some but no all of the potassium can be replaced by other suitable cations, such as sodium.

The pH of the formulated material should be greater than about 5 and preferably at least 7 in order to avoid significant hydrolysis of the polyphosphate over an extended storage period.

In the final product about 100 to 750 grams of microcapsules per liter of the composition and preferably about 400 to about 600 grams microcapsules per liter are present. The encapsulating polymer component to the encapsulated pesticide normally will be in the range of about 0.02 to about 5.0% by weight and preferably in the range of about 0.04% to about 4.0% by weight.

Liquid fertilizers are compatible with the formulations of the present invention. Thus, suitable liquid fertilizers can be mixed with the formulations herein without the formation of unacceptable amounts of agglomerates in the spray tank, thus avoiding poor spraying performance. The liquid fertilizers used in mixtures of the present invention can be liquid nitrogen fertilizers, optionally containing phosphate and/or potash components. Liquid fertilizers are usually designated by the percentage weight of nitrogen, phosphorous and potassium (N-P-K) ratios, e.g., 4-10-10, 6-18-18, or 10-30-10.

The present invention is better illustrated and explained in more detail in the following examples wherein all parts are given on a weight basis unless otherwise stated.

## EXAMPLE 1

This example illustrates the preparation of an aqueous suspension of microencapsulated alachlor used as the microencapsulated feedstock for formulating with the suspension systems disclosed in most subsequent examples.

In the microencapsulation operation microencapsulated alachlor (2',6'-diethyl-N-methoxymethylacetanilide) was prepared from the following components.

### Table 1

| Component | Grams |
|---|---|
| Alachlor (Technical)[1] | 200 |
| PAPI[2] | 14 |
| HMD[3] | 14 |
| REAX 88B[4] | 163 |
| | 391 |

[1] 94% active ingredient (a.i.)

[2] Polymethylene polyphenylisocyanate produced by Dow Chemical having an average functionality of 2.7 and a typical isocyanate equivalent weight of 134.

[3] Hexamethylenediamine (43% aq. sol.)

[4] Na salt of ligninsulfonic acid (3.0% aq. sol)

Appropriate amounts of PAPI and molten alachlor were stirred together to form a uniform liquid mixture. In a Waring blender cup containing the REAX 88B solution preheated to about 50°C, the shear was gradually increased with concurrent addition of the PAPI-alachlor mixture to form a uniform emulsion. The higher level of shear was continued for about 30 seconds. Thereafter, the HMD component was added while maintaining the high shear. Five seconds after the HMD addition was completed the shear was reduced to provide shear sufficient to maintain continuous minimal agitation, whereupon microcapsules of diameters in the range of 2-20 microns in an aqueous suspension were formed. The walls of the microcapsules were made of polymeric urea and encompassed the alachlor herbicide. This microencapsulated feedstock was allowed to cool under ambient conditions, without using a supplementary heating or cooling source, and, thereby, the temperature of the feedstock was generally 38 to 43°C when the first of any additional components were added.

## EXAMPLE 2

This example illustrates the use of densification agents in a microcapsule suspension system known in the prior art.

In the blending and suspension operation a mixture of 13 grams of sodium chloride and 26 grams of calcium chloride as densification salts was added to the microencapsulated feedstock of Example 1 at low shear to form a microcapsule-containing aqueous suspension. The salts significantly enhanced the densification of the aqueous phase of the product. Finally, 22.4 grams of an aqueous solution containing 1% xanthan gum thickener (Kelzan S) and a biocidal amount of Proxel biocide were added to the densified aqueous solution. The resulting product was allowed to cool to room temperature. It was noted that the product became moderately viscous and would not drain satisfactorily from a glass or plastic bottle. The drainage time of the product from the container was long and an excessive amount of the product adhered to the walls of the container which could not be removed to an acceptable level by gravity flow alone.

## EXAMPLE 3

This example illustrates the practice of the present invention.

Microencapsulated feedstock was prepared as described in Example 1 except that 127 grams of REAX 88B (3.5% aq. sol.) was used instead of 163 grams of REAX 88B (3.0% aq. sol).

In the blending and suspension operation 27.2 grams of TKPP and 32.6 grams of HPM-20 bentonite clay (7% in water) were added to the feedstock at low shear to form a microcapsule-containing aqueous suspension. The addition of TKPP resulted in a significant enhancement of the densification of the aqueous phase of the product. Finally, 22.4 grams of an aqueous solution containing 0.2% xanthan gum thickener (Kelzan S) and a biocidal amount of Proxel biocide were added to the densified aqueous solution. The resulting product was allowed to cool to room temperature. It was noted that the resulting product was stable over an extended period of change with excellent fluidity and drainage from plastic and glass containers.

## EXAMPLE 4

Various densification salts as listed in Table 2 were added to three separate portions of a single preparation of microencapsulated feedstock made in accordance with Example 1 to form a like number of intimate mixtures.

Each mixture was prepared by stirring 188 grams of feedstock and 12 grams of salt with the addition time of the salt generally ranging from 20 to 30 seconds. Any change in viscosity or in surface turbulence of the stirred mixture upon the addition and dissolution of the salt was observed. When the selected salt was sodium chloride, no appreciable change in surface turbulence was observed, thereby indicating no appreciable change in viscosity due to the addition of the salt. When the selected salt was calcium chloride, the surface of the stirred mixture became noticeably smoother, thereby indicating an appreciable increase in viscosity due to the addition of the salt. When the selected salt was TKPP, the surface of the stirred mixture became noticeably more turbulent, thereby indicating an appreciable reduction in viscosity due to the addition of the salt.

Each resulting mixture was used to fully coat the inside surface of a 114 mL (4 oz.) glass bottle and a 114 mL (4 oz.) plastic bottle. Each container was turned upside down to permit the contents of the bottle to freely flow out during five minutes drainage time. The weight amount of product in grams remaining in each container after draining was determined for each test. The viscosity of each test product was determined using the Ford Cup method. Densities of the aqueous phase of the resulting fluids were measured, after the microcapsules were removed by vacuum filtration. The results of the above testing are summarized in the Table 2 below. All testings in this example and in the following examples were done at room temperature (20-22°C), at a time twenty-four hours after the product was made, unless otherwise specified.

Table 2

| Salt | Grams Product Remaining in Container After Drainage | | Ford Cup | Aqueous |
|------|------|------|------|------|
| | Glass Bottle | Plastic Bottle | Time, seconds | Density |
| NaCl | 1.01 | 2.01 | 49 | 1.1090 |
| $CaCl_2$ | 1.50 | 2.37 | 44 | 1.1095 |
| TKPP | 0.43 | 0.72 | 23 | 1.1323 |

In the procedure for measuring the viscosity, a standard #4 Ford Viscosity Cup (100+ mL) obtained from Paul N. Gardner Company was used. In the procedure the drainage orifice in the bottom of the cup was sealed and the cup was completely filled with the fluid. The seal was removed and the time elapsed between removal of the seal and the drainage of 100 mL into a graduate cylinder was recorded. Thus, the Ford Cup Time is the number of seconds between the starting and draining of 100 mL of the tested fluid being drained by gravity from the cup at 20 - 22°C.

From Table 2 it will be noted that the addition of TKPP resulted in an aqueous density much more closely approximating the 1.145 density of the microcapsulated alachlor than like amounts of each of the other two tested salts. All density determinations were made at 25°C. As can be seen, for equal weights of added salt, TKPP increases aqueous density more than the other tested salts. Thus to attain any target or desired aqueous density, less TKPP is required than the other tested salts.

It is noted that the addition of the potassium polyphosphate resulted in an appreciable thinning of the suspension which did not occur when NaCl and $CaCl_2$ were added.

As can be seen from the above, the product employing TKPP as the densification agent drained significantly better from both the plastic bottle and the glass bottle and had a substantially lower viscosity than the same product employing either NaCl or $CaCl_2$ densification agents as used in the prior art and had a density more closely approximating the density of the microcapsules. Again, to attain any target or desired aqueous density, less TKPP is required than the other tested salts.

## EXAMPLE 5

In this example an additional salt was used in the suspension system to illustrate the importance of a solubilized potassium polyphosphate salt for improving the pourability of microcapsules suspended in a water-based carrier.

To 188 grams of the feedstock made in accordance with Example 1 was added 12 grams of potassium tripolyphosphate (KTP) from FMC, Inc. The drainage of the resulting mixture from the glass and plastic bottles and the Ford Cup viscosity time as described in Example 4 were determined. It was found that the coating on the glass bottle weighed 0.41 grams and on the plastic bottle weighed 0.81 grams and that the resulting product had a Ford Cup viscosity time of 24 seconds. Thus, it is seen that the use of KTP improves the pourability of the suspended microcapsules to a similar extent that TKPP improves such pourability.

## EXAMPLE 6

In this example four additional salts were tested for pourability enhancement following the procedure of Example 4. The tested salts were sodium salts rather than the potassium salts of the present invention and are identified as follows:

a) Tetrasodium pyrophosphate (TSPP)
b) Sodium acid pyrosphophate (SAPP)
c) Sodium hexametaphosphate (SHMP)
d) Sodium tripolyphosphate (STP)

With the use of TSPP, it was found that insoluble salt crystals formed and the resulting product was appreciably thicker and less pourable than when TKPP was used in a similar formulation. It was found that the coatings on glass and plastic bottles, respectively, weighed 0.94 grams and 1.66 grams and the resulting product had a Ford Cup viscosity time of 49 seconds.

With the use of SAPP, it was noted that the resulting product immediately after dissolution became excessively thick. It was found that the coatings on glass and plastic bottles, respectively, weighed 0.88 grams and 1.70 grams and the resulting product had a Ford Cup viscosity time of 33 seconds.

With the use of SHMP, it was noted that the resulting product immediately after dissolution became thicker. The thickness, however, was less than in the case where SAPP was added. It was found that the coatings on glass and plastic bottles, respectively, weighed 0.74 grams and 1.27 grams and the resulting product had a Ford Cup viscosity time of 31 seconds.

With the use of STP, it was noted that the resulting product became slightly thicker. It was found that the coatings on glass and plastic bottles, respectively, weighed 0.51 grams and 0.96 grams and the resulting product had a Ford Cup viscosity time of 35 seconds.

With the use of STP, it was found that such salt had only marginal solubility in the composition, particularly after aging at cold temperatures.

The above demonstrates that the use of sodium salts alone rather than the potassium salts of the present invention does not generally enhance the pourability of the formulated microcapsules as does the use of the potassium polyphosphates.

## EXAMPLE 7

In this example the combination of TSPP plus KCl was used as the tested pourability enhancing agent to show that the potassium ions do not have to be derived directly from the added polyphosphate salt but may be derived from an associated potassium-containing compound.

To 188 grams of the feedstock made in accordance with Example 1 were added 7.08 grams of TSPP and 5.66 grams of KCl. These weights correspond to a 1:4 molar ratio of pyrophosphate to potassium ions. The drainage of the resulting mixture from the glass and plastic bottles and the Ford Cup viscosity time as described in Example 4 were determined. It was found that the coating remaining on the glass bottle weighed 0.42 grams and on the plastic bottle weighed 0.86 grams and that the resulting product had a Ford Cup viscosity time of 23 seconds.

## EXAMPLE 8

In this example the combination of TSPP plus potassium acetate (KAc) was used to show that the potassium ions do not have to be derived directly from the added salt but may be derived from an associated potassium-containing compound.

To 188 grams of the feedstock in accordance with Example 1 were added 4.85 grams of TSPP and 7.15 grams of KAc. These weights correspond to a 1:4 molar ratio of pyrophosphate to potassium ions. The drainage of the resulting mixture from the glass and plastic bottles and the Ford Cup viscosity time as described in Example 4 were determined. It was found that the coating remaining on the glass bottle weighed 0.50 grams and on the plastic bottle weighed 0.50 grams and that the resulting product had a Ford Cup viscosity time of 30 seconds.

## EXAMPLE 9

In this example the use of the solubilized potassium polyphosphate salt to enhance the pourability of microcapsules suspended in water based carrier is illustrated wherein formulation additaments have been included to provide a broad spectrum of properties required in many commercial formulations of this sort.

To 390 grams of the feedstock made in accordance with Example 1 were added 15.8 grams of TKPP and 15.8 grams of monopotassium phosphate (MKP), and 1.36 grams of Attagel 40 (attapalgite clay) suspended in 12.2 grams of water. To the resulting mixture 0.34 grams of Legend MK biocide, and 0.11 grams of Kelzan S xanthan gum which was suspended in 12.1 grams of water were added. It was found that the final mixture had good drainage from the glass and plastic bottles and a low Ford Cup viscosity time. After several months the final mixture still had excellent pourability with excellent suspension of the microcapsules having been maintained.

## EXAMPLE 10

To 390 grams of the feedstock made in accordance with Example 1 was added 23 grams of TKPP. A mixture of 16.3 grams of water, 6.9 grams of TKPP, 0.42 grams of Legend MK biocide, 8.0 grams of Attaflow clay and 3.2 grams of 75% aqueous solution of phosphoric acid was added. It was found that the final mixture had good drainage from the glass and plastic bottles and a low Ford Cup viscosity time. After several months the final mixture still had excellent pourability with slight top clearing of the suspension which readily redispersed with gentle inversion of the formulation.

## EXAMPLE 11

To 390 grams of the feedstock made in accordance with Example 1 was added 25 grams of TKPP. A mixture of 24.6 grams of water, 0.8 grams of acetic acid and 14.6 grams of potassium hydroxide were thereafter added. Next, 3.22 grams of Attaflow attapulgite clay was added. Then, to the resulting mixture a mixture of 5.40 grams of water, 0.02 grams of TKPP, 0.32 grams of Legend MK biocide, 0.56 grams of HPM-20 bentonite clay, and 0.05 grams of Keltrol RD xanthan gum was added.

It was found that the final mixture had good drainage from the glass and plastic bottles and a low Ford Cup viscosity time. After several months the final mixture still had excellent pourability with excellent suspension of the microcapsules having been maintained.

## EXAMPLE 12

To reduce the number of sprayings on chemically treated crops, it is often desirable to spray a mixture of liquid fertilizer, such as a 10-34-0 fertilizer and herbicide. It has been observed that the herbicide composition of Example 2 can not always mix evenly throughout a sprayable fluid fertilizer or the components may separate too quickly to make their combined use of practical value. Using a standard sprayable fluid fertilizer compatibility test, it was noted that the compatibility of the herbicidal compositions of Examples 3, 9, 10 and 11 with a liquid 10-34-0 fertilizer was significantly improved over the herbicidal composition of Example 2 with the same fertilizer. Likewise, excellent compatibility was obtained when 10-30-0 or 3-10-30 fertilizers and the composition of Examples 3, 9, 10 and 11 were mixed.

EXAMPLE 13

A tank mixture was prepared by combining a portion of the product of Example 9 and a portion of an aqueous solution of 41% glyphosate herbicide and 12% ethoxylated tallowamine (15 E.O.) surfactant and was applied postemergent to several plants.

The post-emergence herbicidal activity of some of the various compositions was demonstrated by greenhouse testing in the following manner. Topsoil is placed in aluminum pans having holes in the bottom and compacted to a depth of 0.95 to 1.27 cm. from the top of the pan. A predetermined number of seeds of each of several dicotyledonous and/or monocotyledonous annual plant species and/or vegetative propagules for the perennial plant species are placed on the soil and pressed into the soil surface. The seeds and/or vegetative propagules are covered with soil and leveled. The plants are then placed on a bench in the greenhouse and watered from below as needed. After the plants reach the desired age (two to three weeks), each pan is removed individually to a spraying chamber and sprayed by means of an atomizer, operating at a spray pressure of 170.3 kPa (10 psig) at the application rates noted. The spray solution or suspension contains a sufficient amount of the candidate herbicide in order to give application rates of the active ingredient corresponding to those shown in Table 3 while applying a total amount of solution or suspension equivalent to 1870 L/Ha (200 gallons/acre). The pans were returned to the greenhouse and watered as before and the injury to the plants as compared to the control is observed at approximately 10-14 days (usually 11 days). In Table 3 the percent inhibition of the plant species (average of 3 replicates) are shown.

The plant species usually regarded as weeds which are utilized in one set of tests, the data for which are shown in Table 3, are identified by letter headings above the columns in accordance with the following legend:

Dobr - Downy brome
Bygr - Barnyardgrass
Mogl - Morningglory
Vele - Velvetleaf
Whez - Wheat

## Table 3

| Tested Formulation | Rate kg/ha | DOBR | BYGR | MOGL | VELE | WHEZ |
|---|---|---|---|---|---|---|
| 1. IPA Glyphosate | 0.14 | 10 | 48 | 13 | 15 | 15 |
| | 0.28 | 58 | 83 | 60 | 57 | 48 |
| | 0.43 | 93 | 98 | 70 | 82 | 95 |
| 3. IPA Glyphosate* | 0.14 | 0 | 10 | 22 | 0 | 7 |
| | 0.28 | 10 | 45 | 43 | 20 | 13 |
| | 0.43 | 40 | 60 | 62 | 55 | 37 |
| 4. IPA Glyphosate** | 0.14 | 17 | 62 | 62 | 65 | 33 |
| | 0.28 | 73 | 75 | 65 | 75 | 55 |
| | 0.43 | 88 | 82 | 70 | 85 | 70 |

* also contains the formulation of Example 2 (no added TKPP) sufficient to be applied at a rate of 2.8 kg/ha alachlor

** also contains the formulation of Example 8 (added TKPP) sufficient to be applied at a rate of 2.8 kg/ha alachlor

As can be seen, the compositions of the present invention containing the TKPP are significantly less antagonistic to glyphosate herbicide than are similar compositions containing no TKPP.

EXAMPLE 14

This illustrates a formulation with alachlor as a first herbicide and atrazine as a second herbicide.

To 388 grams of feedstock of Example 3 were added 38 grams of TKPP, 38 grams of MKP, and 21 grams of Attaflow. In a separate vessel equipped for high-shear agitation were mixed 76 grams of water, 2.5 grams of REAX 88B powder, and 117.7 grams of atrazine (97%). After the atrazine was wetted completely under high shear agitation, 33 grams of an aqueous solution containing 1.1% Kelzan S and a biocidally effective amount of Proxel GXL was added to the atrazine suspension. Finally, the atrazine suspension was blended into the densified microencapsulated feedstock under low-shear conditions. After several months the final mixture still had excellent pourability and good suspension stability.

In the above examples REAX 88B lignosulfonate surfactant was obtained from Westvaco Corporation and had a nominal degree of sulfonation of about 3.8. The sulfonic acid groups were located both on aromatic ring and aliphatic side chains.

The TKPP used in the above examples was obtained from Monsanto Company in granular form with a percent assay of $K_4P_2O_7$ of 99.

Legend MK biocide was obtained from Rohm and Haas as a mixture of two isothiazolones as the active

12

ingredients, namely 5-chloro-2-methyl-4-isothiazolin-3-one and 2-methyl-4-isothiazolin-3-one.

Proxel GLX biocide was obtained from ICI America, whose active ingredient is 1,2-benzisothiazolin-3-one.

The xanthan gums were obtained from Merck & Co., Inc. under the names KELZAN S and Keltrol RD in the form of a dry powder.

Attapulgite clays were obtained from Englehard Corp. under the names Attaflow FL (21% aqueous slurry) and Attagel 40 (a dry powder).

Bentonite used in the examples was obtained from American Colloid in the sodium form with high purity under the name HPM-20.

Similar excellent results as obtained in the above examples can be obtained when different polyurea-forming substances, different pesticides, different suspending aids and other effective water soluble phosphate salts are employed. For example, as the polyurea forming substance, the urea polymer can be formed by the hydrolysis of an isocyanate monomer to form an amine which, in turn, reacts with another isocyanate monomer to form polyurea.

Although the above examples illustrate the use of lignosulfonate as a preferred surface active agent in the microencapsulation step, other known surface active agents can also be used, for example, the sodium salt of alkylnaphthalene sulfonic acid, the potassium salt of alkylnaphthalene sulfonic acid, salts of polystyrenesulfonic acid, in particular, the alkali metal, alkaline earth metal and ammonium salts, salts of polyvinylsulfonic acid, in particular, the alkali metal, alkaline earth metal and ammonium salts thereof, and salts of condensates of napthalenesulfonic acids etc., and mixtures thereof. The dispersant system for the microencapsulation process may also optionally contain one or more non-ionic surfactant, non-ionic protective colloid, or a cationic component such as attapulgite clay.

As can be seen from above the present invention provides several advantages over the prior art. The composition of aqueous suspension of microcapsules having a polyurea wall containing a pesticide has improved flow characteristics due to the presence of a pourability enhancing potassium polyphosphate salt. Users of the present composition for controlling vegetation can take advantage of the easier pumping and mixing thereof. Containers used in blending and spraying the compositions of the present invention can be cleaned with less loss of the composition due to adherence thereof to the walls of the container. The dissolution of the potassium polyphosphate results in an immediate and significant thinning of the aqueous-based suspension. This thinning affords lower shear during subsequent blending during the production of final product, thereby applying less stress on the microcapsules which could disrupt the shell wall of the microcapsules resulting in premature leakage of the encapsulated pesticide. The composition of the present invention readily blends with concentrated liquid fertilizers to provide spray stable mixtures thereof. By using the TKPP densification agent rather than the conventional chloride densification agents, one can avoid the tendency of the chloride to corrode metal containers, pipe and tanks. TKPP is not a corrosion-inducing agent. The composition of the invention avoids the antagonism normally experienced when microencapsulated alachlor and glyphosate mixtures are prepared. Other advantages may be noted.

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth hereinabove but rather than the claims be construed as encompassing all the features of patentable novelty which reside in the present invention, including all features which would be treated as equivalents thereof by those skilled in the art to which the invention pertains.

## Claims

1. A water-based pesticidal flowable formulation comprising a continuous aqueous liquid having suspended therein a multitude of solid microcapsules having a capsule wall of a porous polymer and encapsulating a water-immiscible pesticide and a microcapsule suspension system characterized by the presence of an effective pourability enhancing amount of a solubilized potassium polyphosphate salt.

2. The formulation of claim 1 wherein the polymer is a polyurea polymer.

3. The formulation of Claim 2, wherein the polyurea is the polymerization product of a polyisocyanate and a polyamine.

4. The formulation of Claim 3, wherein the microcapsules are formed by high sheer mixing of the pesticide, the polyisocyanate and the polyamine in water in the presence of a lignosulfonate surfactant.

5. The formulation of Claim 4, wherein the polyisocyanate is polymethylenepolyphenylisocyanate.

6. The formulation of Claim 4 or 5, wherein the polyamine is hexamethylenediamine.

7. The formulation according to any preceding claim, wherein said polyphosphate salt is tetrapotassium pyrophosphate or potassium tripolyphosphate.

8. The formulation according to any preceding claim wherein the suspension system further includes a clay and/or a polymeric gum thickening agent.

9. The formulation of Claim 8, where the clay is a bentonite clay or an attapulgite clay or mixtures thereof.

10. The formulation of Claim 8 wherein the polymeric gum thickening agent is a xanthan gum.

11. The formulation according to any preceding claim wherein the pesticide is a 2-haloacetanilide herbicide.

12. The formulation of Claim 11, wherein the 2-haloacetanilide herbicide is acetochlor, alachlor, metolachlor, 2-chloro-N-[(1-ethyl-2-methoxy)-ethyl]-N-(2,4-dimethylthien-3-yl)acetamide or mixtures thereof.

13. The formulation according to any preceding claim, wherein the formulation contains in the range from about 100 to about 750 grams of microcapsules per liter, preferably from 400 to 600 grams of microcapsules per liter.

14. The formulation according to any precding claim, wherein the capsule wall component and the encapsulated pesticide is in the weight ratio in the range from 0.02 to 5.0, preferably in the range of 0.04 to 4.0%.

15. The formulation according to any of claims 7 - 14 wherein the weight percent of tetrapotassium pyrophosphate is in the range from 1% to 15% based on the weight of the formulation.

16. The composition according to any precding claim comprising a second water soluble or water insoluble pesticide which is not encapsulated, or a liquid fertilizer.

17. The composition of Claim 16 wherein the second pesticide is a triazine, preferably atrazine.

18. The composition of Claim 16 wherein the second pesticide is glyphosate herbicide.

19. A method of controlling or killing a pest such as weeds by applying a composition of any Claims 1 to 18 to said pest in a pesticidal effective amount.